Europäisches Patentamt

(19) European Patent Office

Office européen des brevets

(11) Publication number: **0 056 626**
A2

# (12) EUROPEAN PATENT APPLICATION

(21) Application number: 82100246.6

(22) Date of filing: 14.01.82

(51) Int. Cl.³: **B 60 K 17/16**
//F16H1/14, F16H1/40

(30) Priority: 20.01.81 JP 5904/81

(43) Date of publication of application:
28.07.82 Bulletin 82/30

(84) Designated Contracting States:
DE FR GB

(71) Applicant: NISSAN MOTOR COMPANY, LIMITED
No.2, Takara-cho, Kanagawa-ku
Yokohama City(JP)

(72) Inventor: Shibuya, Toshio
No. 1754-11, Kamiyabe-cho Totsuka-ku
Yokohama City(JP)

(74) Representative: Patentanwälte Grünecker,
Dr.Kinkeldey Dr.Stockmair, Dr.Schumann,Jakob,
Dr.Bezold Meister, Hilgers, Dr.Meyer-Plath
Maximilianstrasse 43
D-8000 München 22(DE)

(54) Final drive unit.

(57) A drive pinion shaft (38) is rotatably supported in front
and rear pinion bearings (40,42) and has a shaft portion (38a)
on which the rear pinion bearing (42) directly rolls.

EP 0 056 626 A2

Croydon Printing Company Ltd

./...

FIG.3

I

0056626

# FINAL DRIVE UNIT

## BACKGROUND OF THE INVENTION

### 1. Field of the Invention

The present invention relates in general to a final drive unit for automotive vehicles and more particularly to the improvement in the level of the noises caused by the differential assembly of the unit, i.e., the so called differential noises.

### 2. Description of the Prior Art

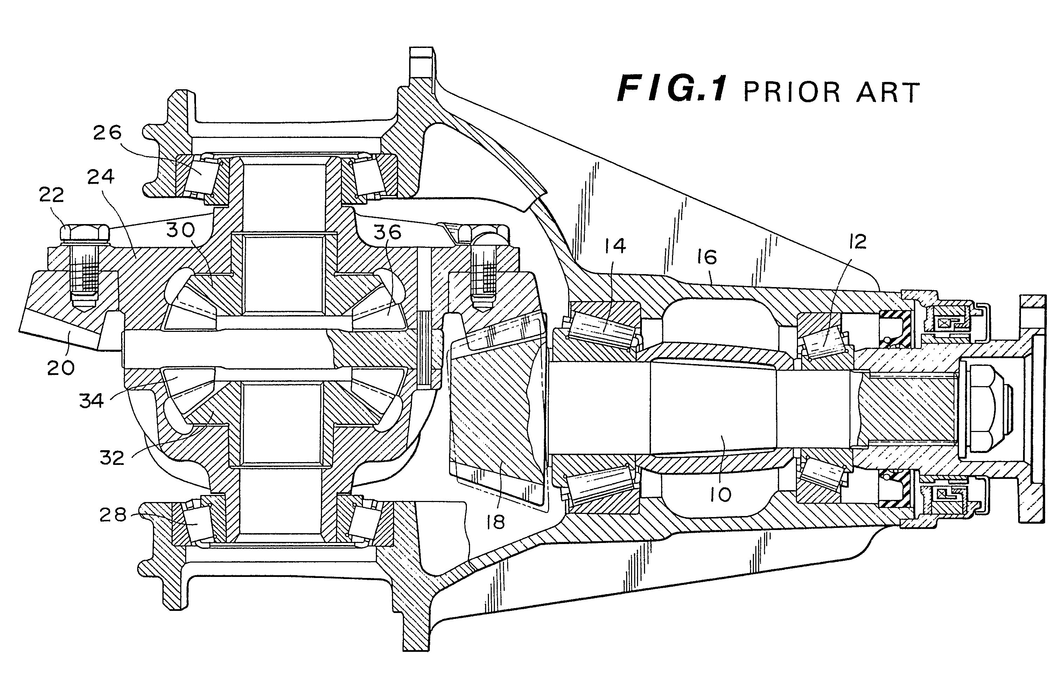

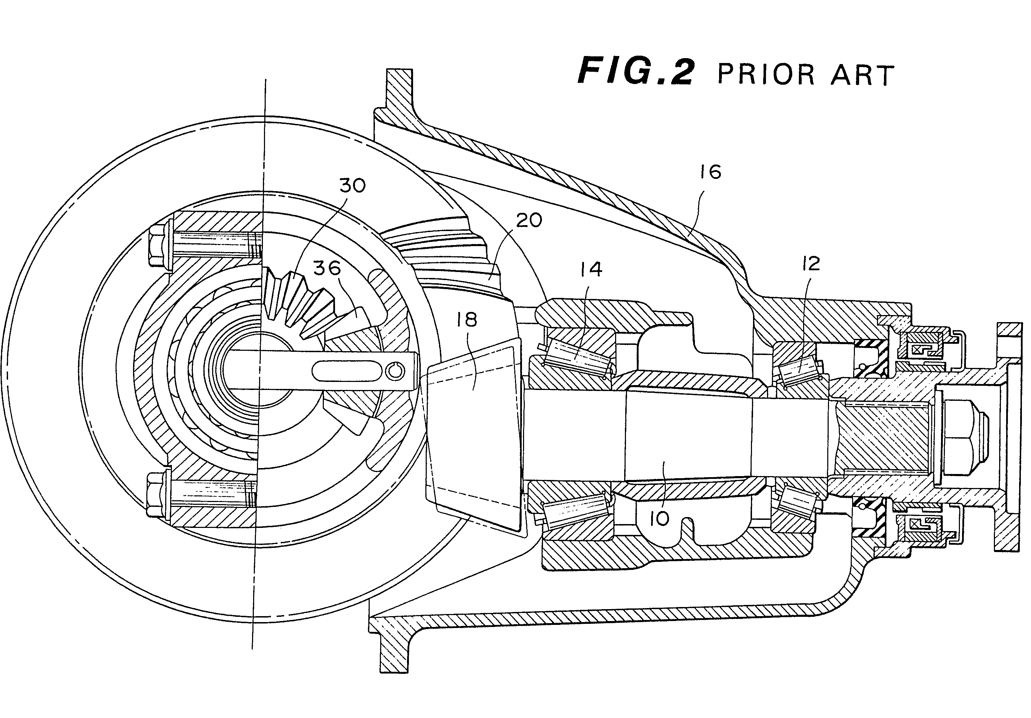

The final drive unit is generally provided in an automotive vehicle drive line for connecting a propeller shaft with vehicle driving wheels through a differential mechanism. Figs. 1 and 2 show a typical final drive unit for automotive vehicles.

Referring to Figs. 1 and 2, designated by the reference numeral 10 is a differential input shaft or a drive pinion shaft 10. Though not shown, a propeller shaft is drivingly connected to the front end (the right-hand end in the drawing) of the drive pinion shaft 10 to transmit thereto engine power. The drive pinion shaft 10 is rotatably supported in front and rear pinion bearings 12 and 14 which are in turn supported on a carrier housing 16. The pinion shaft 10 has at the rear end thereof an integral drive pinion 18 which

-1-

is brought into mesh with a ring gear 20. The ring gear 20 is fixedly attached with bolts 22 to a differential casing 24. The differential casing 24 is rotatably supported in a pair of bearings 26 and 28 which are in turn supported on the carrier housing 16. Within the differential casing 24, there are provided a pair of side gears 30 and 32 and a pair of pinions 34 and 36 to constitute together with the ring gear 20 and the differential casing 24 a differential mechanism or assembly.

In operation, the pinion shaft 10 is subjected at the rear end thereof to bending loads due to the reaction forces which the drive pinion 18 receives when driving the ring gear 20 or due to the driving forces which the drive pinion receives when driven by the ring gear under engine braking conditions. In this connection, the pinion shaft 10 supported in a cantilever fashion tends to be distorted or deformed to allow the displacement of the drive pinion 18 as shown by the chain lines in Figs. 1 and 2. Due to this distorsion, the pinion depth position in the ring gear varies or, in other words, the drive pinion is moved out of the position for correct contact with the ring gear. This result in the noisy operation of the differential assembly, i.e., a high differential noise level.

Increasing the diameter of the pinion shaft is effective only for lowering the differential noise level. However, such method of simply increasing the pinion shaft diameter will inevitably cause another disadvantage. That is, the rear pinion bearing 14 is required to be increased in size and consequently the carrier housing as well. In the past, there have been no effective measures for lowering the differential noise level without causing the increase in size, weight and manufacturing cost of the final drive unit.

SUMMARY OF THE INVENTION

In accordance with the present invention, there is provided a novel and improved final drive unit. The final drive unit has a carrier housing and intermeshing drive pinion and ring gear within the carrier housing as usual.

Improvement is made to the final drive unit according to the present invention and which comprises a drive pinion shaft carrying at one end thereof the drive pinion and a rolling-element type bearing rotatably supporting the pinion shaft at a portion thereof contiguous to the drive pinion in the carrier housing, the drive pinion shaft portion constituting an inner race of the bearing.

The above structure enables the drive pinion shaft to have an increased rigidity without causing the increase in size of the bearing and the carrier housing.

It is accordingly an object of the present invention to provide a novel and improved final drive unit for automotive vehicles which is free from the foregoing drawbacks inherent in the prior art device.

It is another object of the present invention to provide a novel and improved final drive unit of the above mentioned character which can effect smooth and quiet operation.

It is a further object of the present invention to provide a novel and improved final drive unit of the above mentioned character which is enabled to increase the rigidity of the pinion drive shaft without causing the increase in size, weight and cost of the final drive unit.

BRIEF DESCRIPTION OF THE DRAWINGS

The features and advantages of the final drive unit according to the present invention will become more clearly appreciated from the following description taken in conjunction with the accompanying drawings, in which:

Figs. 1 and 2 are sectional views of a prior art final drive unit with respect to horizontal and vertical sectional planes, respectively; and

Fig. 3 is a sectional view of a final drive unit according to the present invention.

DESCRIPTION OF THE PREFERRED EMBODIMENT

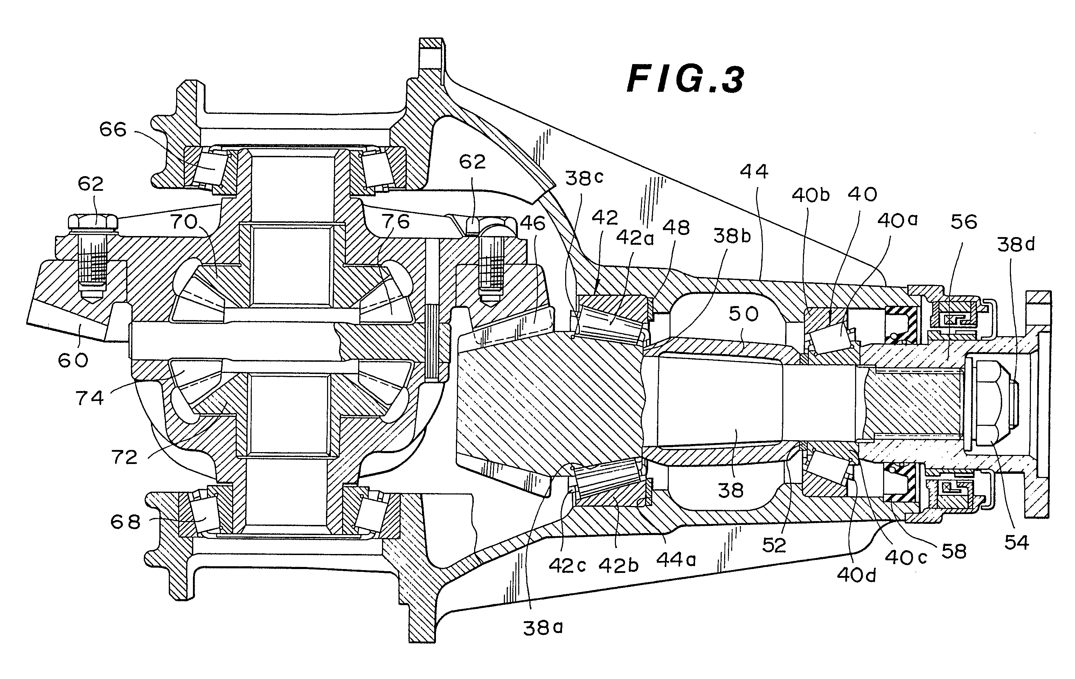

Referring to Fig. 3, the final drive unit of the present invention is shown to comprise a differential input shaft or a drive pinion shaft 38 which is drivingly connected at the front end thereof (the right-hand end in the drawing) to a propeller shaft (not shown) so as to be driven thereby. The drive pinion shaft 38 is rotatably supported in front and rear pinion bearings 40 and 42 which are in turn supported on a carrier housing 44. The front pinion bearing 40 is a tapered roller bearing comprised of tapered rollers 40a, outer and inner races 40b and 40c and a roller guide ring 40d. The outer race 40b is fixedly attached to the carrier housing 44, whilst the inner race 40c is fixedly mounted on the drive pinion shaft 38 so as to be rotatable together therewith. The rear pinion bearing 42 is also a tapered roller bearing comprised of tapered rollers 42a, an outer race 42b fixedly attached to the carrier housing 44 and a roller guide ring 42c. The drive pinion shaft 38 has at the rear end thereof an integral drive pinion 46 and also has at a portion 38a thereof adjacent or contiguous to the drive pinion 46 a tapered surface on which the tapered rollers 42a directly roll. That is, the rear pinion bearing 42 is adapted to directly roll on the tapered shaft portion 38a to dispense with an inner race otherwise needed. It may therefore be expressed that the part 38a of the drive pinion shaft 38 constitutes an inner race of the rear pinion bearing 42. The tapered shaft portion 38a is shaped to reduce in diameter as it goes away from the drive pinion 46.

The carrier housing 44 is formed with a shoulder 44a, and between this shoulder 44a and the outer race 42b of the rear pinion bearing 42 there is interposed a selective fit washer 48 which enables the adjustment of the axial position and therefore the adjustment of the proper tooth contact of the drive pinion 46 by selecting the washer 48 of a proper thickness. The drive pinion shaft 38 is further formed with a pair of shoulders 38b and 38c at the front and rear ends of the shaft portion 38a, respectively. The shoulder 38c is provided to hold the rollers 42a within the raceway. Between the shoulder 38b and the inner race 40c of the front pinion bearing 40 there are provided a spacer 50 and shims 52. By adding or removing the shims 52 and tightening the nut 54 screwed onto the threaded portion 38d of the drive pinion shaft 38 to a reasonable tightness, a predetermined preload on the front and rear pinion bearings 40 and 42 is set. Designated by the reference character 56 is a companion flange which is adapted to be clamped between the nut 54 and the inner race 40c of the front pinion bearing 40 and to which flange the propeller shaft is drivingly connected. Between this flange 56 and the carrier housing 44 there is disposed an oil seal 58 to provide a liquid-tight seal therebetween. The drive pinion 46 meshes with a ring gear 60 which is fixedly attached with bolts 62 to a differential casing 64. The differential casing 64 is rotatably supported in a pair of bearings 66 and 68 which are in turn supported on the carrier housing 44. Within the differential casing 64, there are provided a pair of side gears 70 and 72 and a pair of pinions 74 and 76 to constitute together with the ring gear 60 and the differential casing 64 a differential mechanism or assembly.

In operation, engine power is first transferred to the drive pinion 46 and then to the ring gear 60 of the differential assembly. From the differential assembly, the engine power is transferred to the vehicle driving wheels. In this instance, as discussed in detail with respect to the prior art unit, the drive pinion shaft 38 is subjected at the rear end thereof to bending loads tending to move the drive pinion 46 out of the position for correct contact with the ring gear 60. Since, however, the drive pinion shaft portion 38a at the joint between the drive pinion shaft 38 and the drive pinion 46 is now effectively increased in diameter, the drive pinion shaft 38 has a sufficient rigidity to prevent the movement or at least minimize the amount of movement of the drive pinion 46 out of the correct contact position, resulting in a smooth and quiet operation of the differential assembly, i.e., a low differential noise level. In this connection, it is to be understood that the above advantageous effect can be obtained without substantially increasing the size, weight and manufacturing cost of the final drive unit in accordance with the present invention.

In the foregoing, it is to be noted that the drive pinion shaft portion 38a is of relatively larger diameter whilst the remaining part of the drive pinion shaft 38 extending consecutively from the shaft portion 38a toward the opposite end is of approximately uniform, relatively smaller diameter. This shape of the pinion shaft 38 is quite effective for attaining a large rigidity for a given size and weight.

In the foregoing, while the rear pinion bearing 42 has been described and shown as a tapered roller bearing, this is not limitative and another rolling-element type bearing may be used in place therefor. In the case of using another rolling-element type bearing, it is of course necessary to shape the drive pinion shaft portion 38a into a proper form according to the selected bearing other than the illustrated tapered shape.

Obviously, many variations and modifications are possible in light of the above teachings. It is, therefore, to be understood that within the scope of the appended claims, the invention may be practiced otherwise than as specifically described.

WHAT IS CLAIMED IS:

1.  In a final drive unit having a carrier housing (44) and intermeshing drive pinion (44) and ring gear (60) within said carrier housing (44), the improvement comprising a drive pinion shaft (38) carrying at one end thereof said drive pinion (46) and a rolling-element type bearing (42) rotatably supporting said pinion shaft (38) at a portion (38a) thereof contiguous to said drive piniont (46) in said carrier housing (44), said drive piniont shaft portion (38a) constituting an inner race of said bearing (42).

2.  The improvement as set forth in Claim 1, wherein said bearing (42) is a tapered roller bearing and wherein said drive pinion shaft portion (38a) has a tapered shape which reduces in diameter as it goes away from said drive pinion (44).

3.  The improvement as set forth in Claim 1, wherein said drive pinion shaft portion (38a) is of relatively large diameter and wherein the remaining part of said drive pinion shaft (38) extending consecutively from said drive pinion shaft portion (38a) toward the end opposite to said one end is of approximately uniform, relatively smaller diameter.

4. The improvement as set forth in Claim 2, wherein said tapered roller bearing (42) comprises of an outer race (42b) fixedly attached to said carrier housing (44) and a plurality of tapered rollers (42a) which directly roll on said drive pinion shaft portion (38a).

5. The improvement as set forth in Claim 4, wherein said drive pinion shaft (38) further has at one end of said portion (38a) thereof a shoulder (38c) for holding said tapered rollers (42a) within the raceway defined by said drive pinion shaft portion (38a) and said outer race (42b).

6. The improvement as set forth in Claim 1, wherein another rolling-element type bearing (40) is provided for rotatably supporting said drive pinion shaft (38) at a location spaced from said drive pinion shaft portion (38a).

**FIG.1** PRIOR ART

26
24
22
30
36
20
34
32
28
14
16
12
18
10

0056626

FIG.2 PRIOR ART

**FIG.3**